# FASCICULE DE BREVET EUROPEEN

(11) **EP 1 538 007 B1**
(45) Date de publication et mention de la délivrance du brevet: **29.10.2008**
(21) Numéro de dépôt: 04291881.3
(22) Date de dépôt: 23.07.2004
(51) Int. Cl.: B60C 17/04

(54) **Dispositif de roulage à plat pour véhicule automobile et ensemble monté l'incorporant**
Notlaufvorrichtung für Kraftfahrzeug und diese enthaltende Radeinheit
Run flat device for motor vehicle and mounted assembly including it

(30) Priorité: 05.12.2003 FR 0314306
(43) Date de publication de la demande: 08.06.2005
(73) Titulaire: HUTCHINSON, 75008 Paris (FR)
(72) Inventeur: Ratet, Florence, 45120 Chalette sur Loing (FR); Menant, Nicolas, Plainsboro NJ 08536 (US); Heuze, Olivier, 95290 L'isle Adam (FR)
(74) Mandataire: Bolinches, Michel Jean-Marie

(56) Documents cités:
- FR-A- 2 808 734

## Description

La présente invention concerne un dispositif de roulage à plat destiné à équiper un ensemble monté sans chambre à air pour véhicule automobile et un tel ensemble monté incorporant ce dispositif, permettant de parcourir une distance importante à vitesse relativement élevée lorsque l'ensemble monté est partiellement ou totalement dégonflé.

Pour une jante monobloc, les dispositifs de roulage à plat connus sont généralement constitués par un anneau de soutien qui est monté serré autour d'une jante de roue à l'intérieur d'une enveloppe de pneumatique. Cet anneau est formé soit d'une seule pièce aux flancs relativement souples pouvant être continue ou bien d'une pièce souple fendue (i.e. à laquelle on a retiré une tranche), soit d'au moins deux pièces rigides en arc de cercle ou secteurs.

Pour assurer un montage serré d'un anneau fendu ou à secteurs autour de la jante, on a prévu par le passé d'utiliser une connectique rigide d'assemblage et de serrage entre les deux extrémités libres de l'anneau fendu ou entre les extrémités en vis-à-vis des secteurs de l'anneau, par exemple de type vis-écrou. Or, l'expérience a montré que ces connectiques rigides peuvent être l'élément fragile des dispositifs de roulage à plat (phénomènes de fatigue par exemple).

Le document de brevet EP-A-1 153 769 au nom de la Demanderesse a proposé un dispositif de roulage à plat permettant de s'affranchir des problèmes posés par ces connectiques d'assemblage et de serrage. Ce dispositif comprend un anneau de soutien destiné à être monté sur une jante de roue asymétrique de type monobloc qui présente un creux de jante (« drop center » en anglais) et deux rebords de jante axialement interne et externe, ledit anneau étant réalisé en au moins deux secteurs indépendants les uns des autres et présentant chacun des zones radialement interne et externe, et il est tel que chaque secteur est fixé à la jante au niveau de sa zone radialement interne au moyen de vis ou d'une ceinture de serrage qui entoure les rebords latéraux externes des secteurs d'anneau. Plus précisément, la zone radialement interne de chaque secteur d'anneau se termine par une semelle en arc de cercle qui est destinée à prendre appui sur le fond du creux de jante et qui est formée par deux rebords latéraux interne et externe, le rebord interne venant se loger dans une gorge latérale délimitée par le creux de jante alors que le rebord externe, qui épouse le profil du creux de jante, coopère avec les moyens de fixation du secteur de l'anneau sur la jante.

Ce document divulgue ainsi un dispositif de roulage à plat selon le préambule de la présente revendication 1.

Un but de la présente invention est de proposer un dispositif de roulage à plat qui est destiné à être monté dans un creux d'une jante de roue asymétrique de type monobloc, et qui comprend un anneau de soutien présentant deux faces latérales et divisé en secteurs d'anneau indépendants et une ceinture de serrage adaptée pour être montée en appui sur une zone d'appui radialement interne de l'une desdites faces latérales de sorte à caler chaque secteur d'anneau dans le creux de jante, la ceinture comportant des moyens rigides adaptés pour exercer une force latérale et radiale de serrage sur la zone d'appui des secteurs d'anneau, lorsque ces derniers et la ceinture sont montés coaxialement et en juxtaposition contre les deux parois latérales dudit creux, de sorte que la ceinture serre les secteurs d'anneau contre l'une desdites parois latérales et contre ledit creux de jante, en prenant appui sur l'autre paroi latérale, ce dispositif permettant d'optimiser le calage radial en roulage à l'état gonflé de ces secteurs d'anneau dans le creux de jante (i.e. en limitant le phénomène de « centrifugation » de l'anneau par effet centrifuge) et le calage latéral en roulage à plat des secteurs d'anneau dans ledit creux (i.e. vis-à-vis d'efforts latéraux).

A cet effet, ladite ceinture comporte avantageusement au moins deux zones de serrage rigides qui sont respectivement destinées à appuyer sur ladite zone d'appui et sur ladite autre paroi latérale par mise en tension circonférentielle d'une zone de liaison souple que comporte ladite ceinture et qui relie lesdites zones de serrage entre elles.

Dans la présente description, les expressions « axialement interne » et « axialement externe » se réfèrent respectivement aux côtés de la jante de roue qui sont destinés à être tournés vers l'intérieur et vers l'extérieur du véhicule automobile, suite au montage sur un véhicule d'un ensemble monté comportant cette jante.

De préférence, lesdites zones de serrage s'éloignent l'une de l'autre à partir de ladite zone de liaison qu'elles prolongent latéralement.

Selon un mode de réalisation de l'invention, ladite ceinture peut avantageusement comporter des rubans métalliques ou plastiques de section axiale en forme de « U » présentant chacun des ailes respectivement formées par lesdites zones de serrage et une âme que comprend ladite zone de liaison. Ces ailes présentent un profil adapté à la paroi latérale du creux de jante et à la face latérale de l'anneau.

Selon un exemple de réalisation de l'invention, chacune desdites ailes peut avantageusement se terminer par un tronçon d'extrémité qui forme avec ladite âme un angle compris entre 50° et 80°.

Selon une autre caractéristique de l'invention, ladite zone d'appui peut avantageusement présenter une surface sensiblement tronconique, ce qui permet d'optimiser le serrage desdits secteurs d'anneau contre ladite paroi latérale.

Selon un mode de réalisation de l'invention, ladite ceinture peut avantageusement comporter des secteurs de serrage rigides en arc de cercle maintenus espacés entre eux par l'intermédiaire d'une bande souple annulaire sur laquelle sont fixés lesdits secteurs de serrage, ladite bande souple présentant deux extrémités distantes l'une de l'autre qui sont connectées entre elles par un moyen de connexion dont elles sont pourvues. Ce moyen de connexion est adapté pour régler la mise en tension de la ceinture.

On notera que cette ceinture est suffisamment souple en torsion dans sa position ouverte (i.e. avant mise en place dudit moyen de connexion), en vue de son montage autour de la jante.

Selon une autre caractéristique de l'invention, ledit anneau peut comporter une face radialement interne destinée à être montée sur un fond dudit creux et une face radialement externe destinée à soutenir ladite enveloppe en roulage à plat qui est reliée à ladite face radialement interne par lesdites faces latérales, la zone d'appui de l'anneau étant inclinée radialement vers l'extérieur et axialement vers la face latérale opposée dudit anneau.

Selon une autre caractéristique de l'invention, la face latérale opposée dudit anneau peut comporter une zone de butée radialement interne qui est inclinée radialement vers l'extérieur et axialement vers ladite zone d'appui, de sorte que la section axiale dudit anneau diminue radialement vers l'extérieur dans lesdites zones d'appui et de butée.

Selon une autre caractéristique de l'invention, lesdites faces latérales dudit anneau peuvent avantageusement se prolonger radialement vers l'extérieur à partir desdites zone d'appui et de butée, en étant parallèles puis en s'éloignant l'une de l'autre jusqu'à conférer audit anneau une section axiale maximale égale à celle de ladite face radialement externe.

Selon une variante de réalisation de l'invention, la face latérale de chaque secteur d'anneau du côté de ladite zone de butée comporte une collerette latérale en arc de cercle qui prolonge latéralement ladite zone de butée et qui est adaptée pour être montée sur une portée de ladite jante, ledit fond de creux étant sensiblement plat en section axiale.

Selon une autre variante de réalisation de l'invention, ladite face latérale de l'un au moins desdits secteurs d'anneau, du côté de ladite zone de butée, est pourvue d'une saillie latérale adaptée pour coopérer localement en butée avec au moins une encoche formée dans ladite jante, de sorte à empêcher la rotation dans la direction circonférentielle desdits secteurs d'anneau autour de ladite jante.

Selon une autre caractéristique de l'invention, ledit anneau peut avantageusement être à base d'un matériau rigide, tel qu'un polymère thermoplastique (par exemple un polyamide 6 ou un polyamide 6.6), sa face radialement externe destinée à soutenir ladite enveloppe en roulage à plat pouvant être avantageusement à base de caoutchouc.

Un ensemble monté sans chambre à air selon l'invention comprend une jante de roue asymétrique de type monobloc comportant un creux de jante défini par deux parois latérales axialement interne et externe reliées entre elles par un fond, une enveloppe de pneumatique montée contre des rebords axialement interne et externe de ladite jante et un dispositif de roulage à plat tel que défini précédemment qui est monté dans ledit creux de jante et qui comprend :
- un anneau de soutien divisé en secteurs indépendants et présentant deux faces latérales axialement interne et externe, monté sur ledit fond de creux en butée contre ladite paroi latérale interne, et
- une ceinture annulaire de serrage qui est montée en appui sur une zone d'appui radialement interne de ladite face latérale externe de l'anneau de sorte à caler chaque secteur d'anneau dans ledit creux, et qui est montée contre ladite paroi latérale externe,
ladite ceinture comportant des moyens rigides adaptés pour exercer une force latérale de serrage et une force radiale de serrage sur ladite zone d'appui desdits secteurs d'anneau, de sorte que ladite ceinture serre lesdits secteurs d'anneau contre ladite paroi latérale interne et contre ledit creux de jante, en prenant appui sur ladite paroi latérale externe.

Cet ensemble monté est caractérisé en ce que ladite ceinture comporte au moins deux zones de serrage rigides qui appuient respectivement sur ladite zone d'appui et sur ladite autre paroi latérale par mise en tension circonférentielle d'une zone de liaison souple que comporte ladite ceinture et qui relie lesdites zones de serrage entre elles.

Selon une autre caractéristique de l'invention, ladite ceinture est montée au-dessus d'un fond dudit creux reliant lesdites parois latérales entre elles, en étant séparée dudit fond par un jeu radial circonférentiel.

Selon une autre caractéristique de l'invention dans laquelle ladite jante comporte de manière connue des sièges de jante (« seat » en anglais) axialement interne et externe respectivement destinés à recevoir des talons de l'enveloppe, chaque siège étant délimité axialement par l'un desdits rebords et optionnellement par un bossage circonférentiel adjacent, ladite paroi latérale axialement externe dudit creux s'étendant axialement et radialement vers l'intérieur à partir dudit siège axialement externe, ladite paroi latérale axialement interne dudit creux peut avantageusement s'étendre axialement et radialement vers l'intérieur en formant une contre-dépouille coopérant avec une zone radialement interne de ladite face latérale axialement interne de l'anneau, de sorte à bloquer l'anneau sur la jante.

Selon une variante de réalisation de l'invention, ledit dispositif est tel que ladite face latérale de chaque secteur d'anneau située du côté de ladite zone de butée comporte une collerette latérale en arc de cercle qui prolonge ladite zone de butée et qui est montée sur la jante axialement à l'intérieur dudit creux, ledit fond de creux étant sensiblement plat en section axiale, et la jante est également telle que ladite paroi latérale axialement interne dudit creux s'étend axialement et radialement vers l'intérieur en formant ladite contre-dépouille.

Selon une autre variante de réalisation de l'invention, la jante comporte axialement à l'intérieur dudit creux une ou plusieurs encoches réparties localement sur la circonférence de la jante, ladite ou lesdites encoches coopérant localement en butée avec ladite ou lesdites saillies latérales de l'un ou desdits secteurs d'anneau, respectivement, de sorte à immobiliser ce dernier en rotation sur ladite jante.

D'autres caractéristiques, avantages et détails de la présente invention ressortiront à la lecture de la description suivante de plusieurs exemples de réalisation de l'invention, donnés à titre illustratif et non limitatif, ladite description étant réalisée en référence avec les dessins joints, parmi lesquels :
la figure 1 est une vue en demi-coupe axiale d'un ensemble monté incorporant un dispositif de roulage à plat selon l'invention,
la figure 2 est une vue partielle en perspective d'un secteur d'anneau utilisable dans le dispositif de roulage à plat de la figure 1,
la figure 3 est vue en coupe de l'ensemble monté de la figure 1 suivant le plan III-III de celle-ci, et
la figure 4 est une vue en demi-coupe axiale d'une variante selon l'invention de l'ensemble monté de la figure 1.

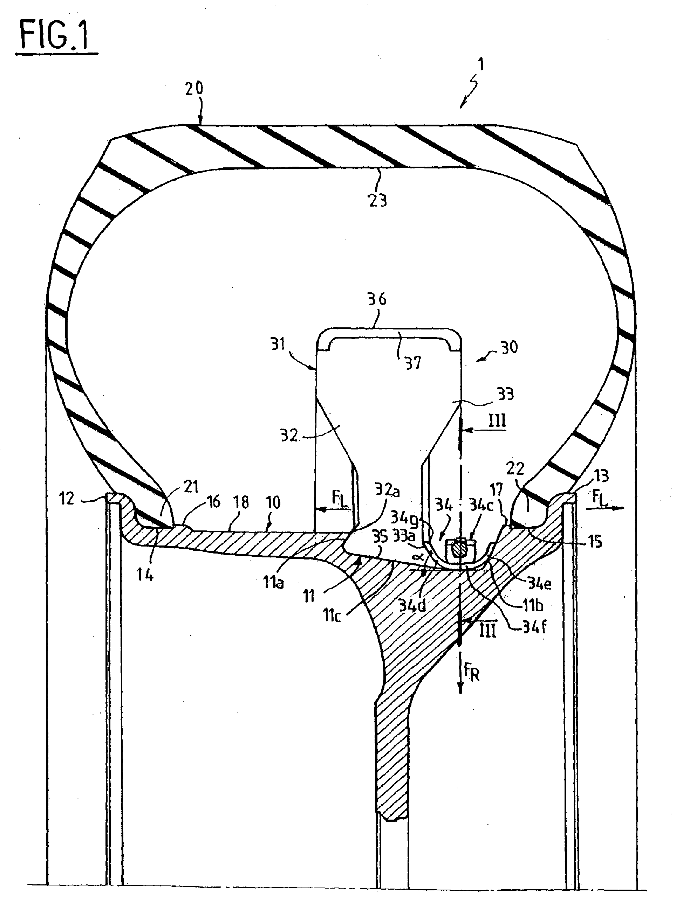

L'ensemble monté 1 illustré à la figure 1 comprend une jante de roue 10 asymétrique de type monobloc comportant un creux de jante 11 circonférentiel, une enveloppe de pneumatique 20 montée contre des rebords axialement interne et externe 12 et 13 de la jante 10, et un dispositif de roulage à plat 30 monté dans le creux de jante 11 et destiné à soutenir l'enveloppe 20 suite à une chute de pression de gonflage à l'intérieur de l'ensemble monté 1.

La jante 10 comporte des sièges de jante axialement interne et externe 14 et 15 respectivement destinés à recevoir des talons 21, 22 de l'enveloppe 20, chaque siège de jante 14, 15 étant délimité axialement par l'un des rebords 12, 13 et par un bossage circonférentiel 16, 17 adjacent.

Le creux de jante 11 est prévu avantageusement adjacent au siège de jante axialement externe 15, et il est défini par deux parois latérales axialement interne et externe 11a et 11b reliées entre elles par un fond 11c, la paroi latérale axialement externe 11b s'étendant axialement et radialement vers l'intérieur à partir du bossage 17 adjacent.

Quant à la paroi latérale interne 11a, de hauteur radiale inférieure à celle de la paroi latérale externe 11b dans l'exemple de réalisation de la figure 1, elle est reliée au bossage axialement interne 16 par une portée 18 sensiblement plane. Selon l'invention, cette paroi interne 11a s'étend radialement vers l'intérieur en formant une contre-dépouille qui est inclinée axialement et radialement vers l'intérieur et qui est destinée à maintenir en place les secteurs 31' et 31" sous les différentes sollicitations de roulage à l'état gonflé et à plat.

Le fond 11c du creux de jante 11 est légèrement incliné axialement vers l'extérieur et radialement vers l'intérieur dans l'exemple de la figure 1, et il est adapté pour recevoir le dispositif 30 entre les parois latérales 11a et 11b.

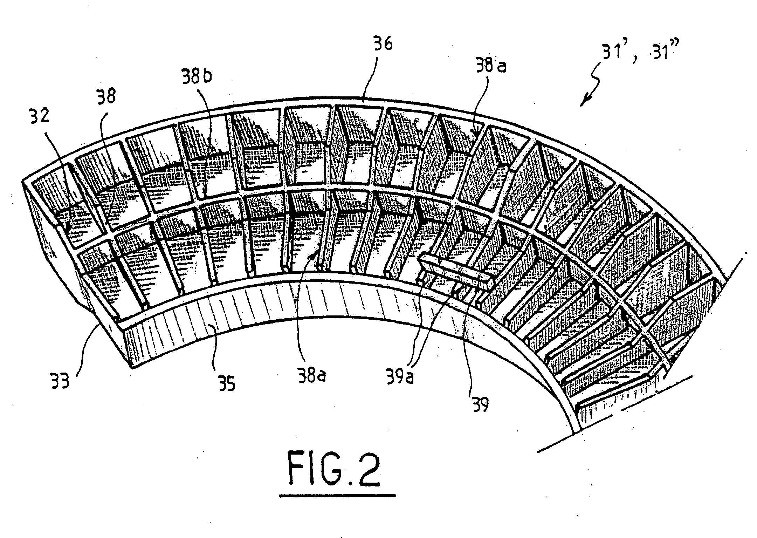

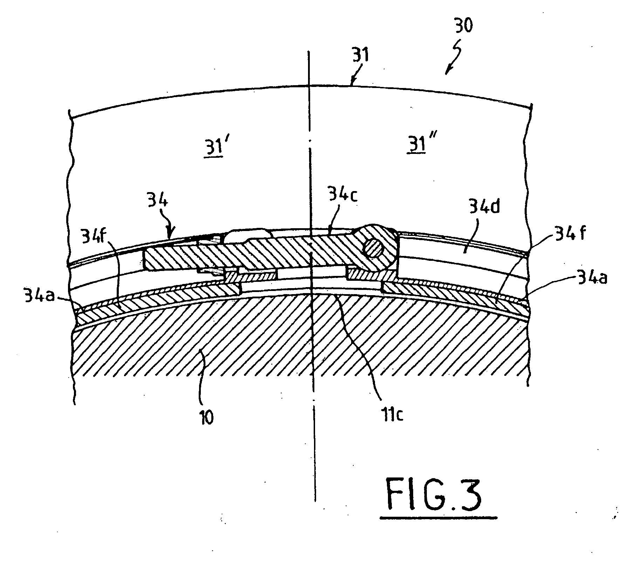

Ce dispositif 30 comprend un anneau de soutien 31 divisé en au moins deux secteurs 31', 31" indépendants en forme d'arc de cercle (visibles aux figures 2 et 3), dont la face latérale axialement interne 32 est destinée à être montée contre la paroi axialement interne 11a et dont la face latérale axialement externe 33 est destinée à être montée contre une ceinture annulaire de serrage 34 qui est elle-même destinée à être montée contre la paroi axialement externe 11b.

L'anneau 31 comporte une face radialement interne 35 destinée à être montée sur le fond 11c du creux 11 et une face radialement externe 36 qui est destinée à soutenir l'enveloppe 20 en roulage à plat et qui est reliée à la face radialement interne 35 par les deux faces latérales 32 et 33. L'anneau 31 présente une zone radialement interne qui est sensiblement destinée à être comprise radialement entre le fond 11c du creux 11 et les sommets respectifs de ses parois latérales 11a et 11b. Cette zone radialement interne est définie, d'une part, par une zone d'appui 33a de la face latérale externe 33 destinée à être montée en appui contre la ceinture 34 et, d'autre part, par une zone de butée 32a de la face latérale interne 32 destinée à être montée contre la paroi latérale 11 a du creux 11.

Selon l'invention, la zone d'appui 33a et la zone de butée 32a de chaque secteur d'anneau 31', 31" sont chacune inclinées radialement vers l'extérieur et axialement l'une vers l'autre, de telle sorte qu'elles présentent chacune une surface sensiblement tronconique et que la section axiale dudit anneau 31 diminue radialement vers l'extérieur dans les zones d'appui 33a et de butée 32a.

Les faces latérales 32 et 33 de chaque secteur d'anneau 31', 31" se prolongent radialement vers l'extérieur à partir des zone d'appui 33a et de butée 32a, respectivement, en étant parallèles puis en s'éloignant l'une de l'autre pour être à nouveau parallèles jusqu'à la face radialement externe 36, laquelle présente une section axiale maximale.

Le secteur d'anneau 31' ou 31" illustré à la figure 2 comporte une paroi circonférentielle médiane 38 en arc de couronne qui est pourvue en chacun de ses côtés de demi-cloisons radiales 38a régulièrement espacées qui s'étendent latéralement de la face radialement interne 35 à la face radialement externe 36 du secteur 31', 31" de sorte que leurs bords latéraux définissent les faces latérales 32 et 33 du secteur d'anneau 31', 31", et qui sont symétriques l'une de l'autre par rapport à la paroi médiane 38. Ces demi-cloisons radiales 38a sont reliées entre elles sensiblement à mi-hauteur radiale, des deux côtés de la paroi médiane 38, par deux demi-cloisons circonférentielles 38b également symétriques l'une de l'autre par rapport à cette paroi 38.

La face latérale 32 de l'un au moins des secteurs d'anneau 31', 31" qui est située du côté de ladite zone de butée 32a (i.e. qui est destinée à constituer la face axialement interne 32 du secteur d'anneau 31', 31" en montage sur une jante), est pourvue d'une saillie latérale 39 en forme de patte pourvue de tenons 39a sur sa face inférieure, qui sont adaptés pour coopérer localement en butée avec des mortaises formées dans au moins une encoche (non représentée) que comporte la jante, de sorte à empêcher la rotation dans la direction circonférentielle des secteurs d'anneau 31', 31" autour de la jante en constituant une « butée de dévirage » pour l'anneau 31.

On notera que plusieurs secteurs d'anneau 31', 31"ou la totalité de ceux-ci pourraient être respectivement pourvus de telles saillies 39, en relation avec autant d'encoches régulièrement formées sur la circonférence de la jante.

Chaque secteur d'anneau 31', 31" est à base d'un matériau rigide (tel qu'un polyamide 6), et sa face radialement externe 36 est avantageusement pourvue d'un revêtement 37 constitué de caoutchouc afin de ne pas abîmer l'enveloppe en cas de roulage à plat.

La ceinture 34 illustrée à la figure 1 est adaptée pour être suffisamment souple en torsion en vue de son montage sur la jante 10 et elle comporte avantageusement des secteurs rigides de serrage en arc de cercle 34', 34" (visibles à la figure 3) maintenus espacés entre eux par une bande souple 34a ouverte entre ses deux extrémités 34b qui sont connectées entre elles par un moyen de connexion 34c. Ces secteurs de serrage 34', 34" pourvus de la bande souple 34a qui est elle-même pourvue du moyen de connexion 34c sont destinés à être montés sur les secteurs d'anneau 31', 31" (l'ensemble constitué par les secteurs de serrage 34', 34", la bande souple 34a et le moyen de connexion 34c formant une seule pièce).

Selon l'invention, chaque secteur de serrage 34', 34" comporte des moyens rigides adaptés pour exercer une force radiale F_{R} et une force latérale F_{L} de serrage (voir la figure 1) sur la zone d'appui 33a de l'anneau 31 et sur la paroi latérale externe 11b, lorsque l'anneau 31 et la ceinture 34 sont respectivement montés en juxtaposition contre les parois latérales 11 a et 11b du creux 11, de sorte que la ceinture 34 cale chaque secteur d'anneau 31', 31" sur le fond 11c du creux 11 et contre la paroi latérale interne 11a.

Chaque secteur de serrage 34', 34" est avantageusement constitué d'un ruban métallique de section axiale en forme de « U » évasé présentant deux ailes 34d et 34e qui forment respectivement deux zones de serrage rigides destinées à appuyer sur la zone d'appui 33a et sur la paroi externe 11 b du creux 11, et une âme 34f reliant les ailes 34d et 34e entre elles. Chaque aile 34d, 34e se termine par un tronçon d'extrémité 34g sensiblement tronconique qui forme avec l'âme 34f un angle α par exemple de l'ordre de 65°.

Selon l'invention, la ceinture 34 est montée sur la jante 10 de telle manière qu'elle se trouve au-dessus du fond 11c du creux 11 en étant séparée de ce fond 11c par un jeu radial circonférentiel, de sorte que les ailes 34d et 34e puissent respectivement exercer librement les forces radiale et latérale de serrage F_{R} et F_{L} sur l'anneau 31 via l'aile interne 34d, et sur la paroi externe 11b via l'aile externe 34e.

La ceinture 34 selon l'invention est par exemple obtenue en mettant en forme de « U » des rubans métalliques ou plastiques formant les secteurs 34', 34" puis en les cintrant en arc de cercle, ensuite en reliant ces secteurs en les fixant sur la bande souple 34a (par exemple au moyen d'une soudure par points) dont les extrémités 34b sont ensuite connectées entre elles par le moyen de connexion 34c connu en soi de type grenouillère (vis-écrou), de sorte à conférer à la ceinture 34 finalement obtenue une flexibilité en torsion améliorée. La structure de ce moyen de connexion 34c est illustrée plus en détail à la figure 3, qui montre notamment l'ouverture entre les deux extrémités 34b de la ceinture 34 et le serrage possible des secteurs d'anneau 31' et 31" par la mise en tension de la ceinture 34 obtenue par vissage du moyen de connexion 34c.

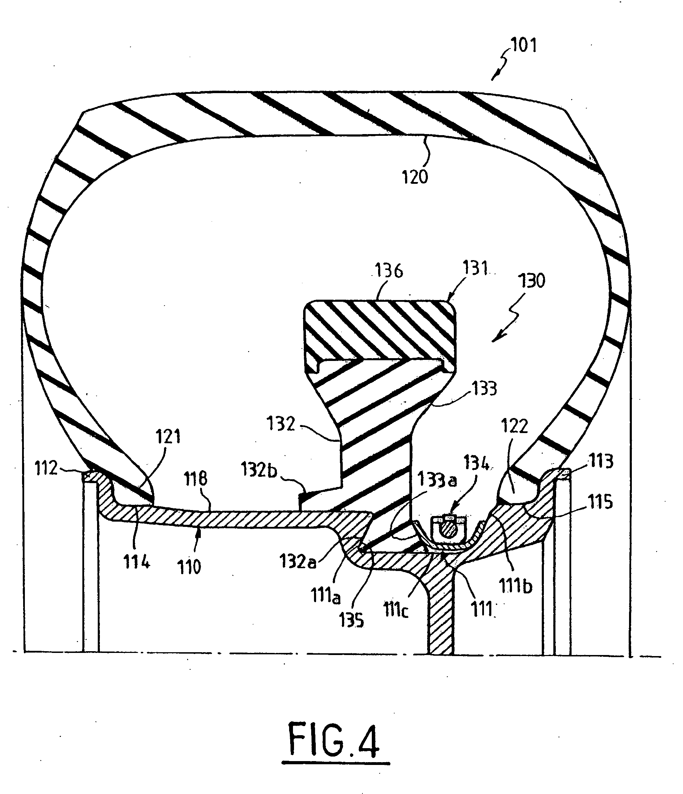

L'ensemble monté 101 illustré à la figure 4 se différencie essentiellement de celui de la figure 1, en ce que :
- la face latérale 132 de chaque secteur de l'anneau 131 qui est située du côté de la zone de butée 132a comporte une collerette latérale 132b en arc de cercle qui prolonge la zone de butée 132a et qui est adaptée pour épouser le profil de la portée de jante 118 axialement à l'intérieur du creux 111, et en ce que
- le fond 111c du creux 111 est sensiblement plat en section axiale.

On notera que cette collerette latérale 132b, qui s'étend sur tout l'arc de circonférence de chaque secteur d'anneau 131, permet avantageusement d'augmenter la surface de contact de l'anneau 131 sur la jante 110 et la tenue au basculement latéral du dispositif de roulage, ainsi que de « soulager » la ceinture 134 des efforts transmis en en reprenant une partie.

Le montage du dispositif de roulage à plat 30 à l'intérieur de l'enveloppe de pneumatique 20 s'effectue essentiellement comme suit.

On commence par monter partiellement l'enveloppe 20 sur la jante 10 en positionnant le talon intérieur 21 de l'enveloppe 20 sur la portée 18, d'une manière axialement adjacente au creux de jante 11, de manière que le talon extérieur 22 se trouve axialement à l'extérieur du rebord externe 13 de la jante 10, puis on insère dans le creux de jante 11 un premier secteur d'anneau 31' par l'espace ainsi ménagé entre le talon extérieur 22 et le rebord externe 13, que l'on positionne contre la paroi latérale interne 11a du creux 11 via le coincement du secteur sur cette paroi 11a. On insère ensuite le ou les autres secteurs d'anneau 31 ", que l'on positionne de même sur la paroi 11 a. Puis on positionne la ceinture 34 dans le creux de jante 11 au contact de la zone d'appui 33a et de la paroi externe 11b. On applique ensuite le couple de serrage via le moyen de connexion 34c afin d'exercer les forces précitées F_{R} et F_{L}, ce qui est possible grâce au jeu existant entre la base 34f de la ceinture 34 et le fond 11c du creux 11.

On applique ensuite un gel lubrifiant sur la face interne 23 de l'enveloppe 20, avant de faire passer le talon externe 22 de l'enveloppe 20 par-dessus le rebord de jante 13. En gonflant l'intérieur de l'enveloppe 20, on plaque via la pression de gonflage les talons 21 et 22 sur leurs sièges de jante respectifs 14 et 15.

## Revendications

1. Dispositif de roulage à plat (30, 130) destiné à équiper un ensemble monté (1, 101) sans chambre à air pour véhicule automobile, comprenant une jante de roue (10, 110) asymétrique de type monobloc comportant un creux de jante (11, 111) défini par deux parois latérales (11 a et 11b, 111a et 111b) et une enveloppe de pneumatique (20, 120) montée sur ladite jante (10, 110), ledit dispositif (30, 130) étant destiné à être monté dans ledit creux de jante (11, 111) de sorte à soutenir ladite enveloppe (20, 120) suite à une chute de pression de gonflage à l'intérieur dudit ensemble monté (1, 101), ledit dispositif (30, 130) comprenant:
- un anneau de soutien (31, 131) divisé en secteurs d'anneau (31', 31") indépendants et présentant deux faces latérales (32 et 33, 132 et 133), et
- une ceinture annulaire de serrage (34, 134) adaptée pour être montée en appui sur une zone d'appui (33a, 133a) radialement interne de l'une desdites faces latérales (33, 133) de l'anneau (31, 131) de sorte à caler chaque secteur d'anneau (31', 31") dans ledit creux de jante (11, 111),
ladite ceinture (34, 134) comportant des moyens rigides adaptés pour exercer une force latérale de serrage (F_{L}) et une force radiale de serrage (F_{R}) sur ladite zone d'appui (33a, 133a) desdits secteurs d'anneau (31', 31"), lorsque ces derniers et ladite ceinture (34, 134) sont montés coaxialement en juxtaposition contre lesdites parois latérales (11a et 11b, 111a et 111b) dudit creux (11, 111), de sorte que ladite ceinture (34, 134) serre lesdits secteurs d'anneau (31', 31") contre l'une desdites parois latérales (11a, 111a) et contre ledit creux (11, 111), en prenant appui sur l'autre paroi latérale (11b, 111b),
**caractérisé en ce que** ladite ceinture (34, 134) comporte au moins deux zones de serrage rigides (34d, 34e) qui sont respectivement destinées à appuyer sur ladite zone d'appui (33a, 133a) et sur ladite autre paroi latérale (11b, 111b) par mise en tension circonférentielle d'une zone de liaison souple (34a, 34c, 34f) que comporte ladite ceinture (34, 134) et qui relie lesdites zones de serrage (34d, 34e) entre elles.

2. Dispositif (30, 130) selon la revendication 1, **caractérisé en ce que** ladite ceinture (34, 134) est divisée en au moins deux secteurs de serrage (34', 34") reliés par l'intermédiaire d'une bande souple annulaire (34a) sur laquelle sont fixés lesdits secteurs de serrage (34', 34") et qui présente deux extrémités (34b) distantes l'une de l'autre et connectées entre elles par un moyen de connexion (34c) adapté pour régler ladite mise en tension.

3. Dispositif (30, 130) selon la revendication 2, **caractérisé en ce que** ladite ceinture (34, 134) comporte des rubans métalliques ou plastiques de section axiale en forme de « U » présentant des ailes formant respectivement lesdites zones de serrage (34d, 34e), ladite zone de liaison souple (34a, 34c, 34f) comportant ladite bande souple (34a) sur laquelle est fixée une âme (34f) de chaque ruban commune auxdites ailes (34d et 34e), ladite bande souple (34a) étant pourvue à ses extrémités (34b) dudit moyen de connexion (34c).

4. Dispositif (30, 130) selon la revendication 2 ou 3, **caractérisé en ce que** lesdits secteurs de serrage (34', 34") sont soudés par points sur ladite bande souple (34a).

5. Dispositif (30, 130) selon une des revendications précédentes, **caractérisé en ce que** ladite zone d'appui (33a, 133a) présente une surface sensiblement tronconique.

6. Dispositif (30, 130) selon une des revendications 3 à 5, **caractérisé en ce que** chacune desdites ailes (34d et 34e) se termine par un tronçon d'extrémité (34g) qui forme avec ladite âme (34f) un angle compris entre 50° et 80°.

7. Dispositif (30, 130) selon une des revendications précédentes, **caractérisé en ce que** ledit anneau (31, 131) comporte une face radialement interne (35, 135) destinée à être montée sur un fond (11c, 111c) dudit creux (11, 111) et une face radialement externe (36, 136) destinée à soutenir ladite enveloppe (20, 120) en roulage à plat qui est reliée à ladite face radialement interne (35, 135) par lesdites faces latérales (132 et 133), ladite zone d'appui (33a, 133a) dudit anneau (31, 131) étant inclinée radialement vers l'extérieur et axialement vers la face latérale opposée (32, 132) dudit anneau (31, 131).

8. Dispositif (30, 130) selon la revendication 7, **caractérisé en ce que** ladite face latérale opposée (32, 132) dudit anneau (31, 131) comporte une zone de butée (32a, 132a) radialement interne qui est inclinée radialement vers l'extérieur et axialement vers ladite zone d'appui (33a, 133a), de sorte que la section axiale dudit anneau (31, 131) diminue radialement vers l'extérieur dans lesdites zones d'appui (33a, 133a) et de butée (32a, 132a).

9. Dispositif (30) selon la revendication 8, **caractérisé en ce que** lesdites faces latérales (32 et 33) dudit anneau (31) se prolongent radialement vers l'extérieur à partir desdites zones d'appui (33a) et de butée (32a), en étant parallèles puis en s'éloignant l'une de l'autre jusqu'à conférer audit anneau (31) une section axiale maximale égale à celle de ladite face radialement externe (36).

10. Dispositif (130) selon la revendication 8, **caractérisé en ce que** ladite face latérale (132) de chaque secteur d'anneau (131) située du côté de ladite zone de butée (132a), comporte une collerette latérale (132b) en arc de cercle qui prolonge latéralement ladite zone de butée (132a) et qui est adaptée pour être montée sur une portée de ladite jante (110), ledit fond de creux (111c) étant sensiblement plat en section axiale.

11. Dispositif selon la revendication 8, **caractérisé en ce que** ladite face latérale (32) de l'un au moins desdits secteurs d'anneau (31', 31") située du côté de ladite zone de butée (32a) est pourvue d'une saillie latérale (39) adaptée pour coopérer localement en butée avec au moins une encoche formée dans ladite jante, de sorte à empêcher la rotation dans la direction circonférentielle desdits secteurs d'anneau (31', 31") autour de ladite jante.

12. Dispositif (30, 130) selon une des revendications précédentes, **caractérisé en ce que** ledit anneau (31, 131) est à base d'un matériau rigide, tel qu'un polymère thermoplastique, sa face radialement externe (36, 136) destinée à soutenir ladite enveloppe (20, 120) en roulage à plat étant à base de caoutchouc.

13. Ensemble monté (1, 101) sans chambre à air pour véhicule automobile, comprenant une jante de roue (10, 110) asymétrique de type monobloc comportant un creux de jante (11, 111) défini par deux parois latérales axialement interne et externe (11a et 11b, 111a et 111b) reliées entre elles par un fond (11c, 111c), une enveloppe de pneumatique (20, 120) montée contre des rebords axialement interne et externe (12 et 13, 112 et 113) de ladite jante (10, 110) et un dispositif de roulage à plat (30, 130) monté dans ledit creux de jante (11, 111) et destiné à soutenir ladite enveloppe (20, 120) suite à une chute de pression de gonflage à l'intérieur dudit ensemble monté (1, 101), ledit dispositif (30, 130) comprenant:
- un anneau de soutien (31, 131) divisé en secteurs d'anneau (31', 31 ") indépendants et présentant deux faces latérales axialement interne et externe (32 et 33, 132 et 133), ledit anneau (31, 131) étant monté sur ledit fond de creux (11c, 111c) en butée contre ladite paroi latérale interne (11a, 111 a), et
- une ceinture annulaire de serrage (34, 134) qui est montée en appui d'une manière coaxiale sur une zone d'appui (33a, 133a) radialement interne de ladite face latérale externe (33, 133) de l'anneau (31, 131) de sorte à caler chaque secteur d'anneau (31', 31") dans ledit creux (11, 111), et qui est montée contre ladite paroi latérale externe (11b, 111b),
ladite ceinture (34, 134) comportant des moyens rigides adaptés pour exercer une force latérale de serrage (F_{L}) et une force radiale de serrage (F_{R}) sur ladite zone d'appui (33a, 133a) desdits secteurs d'anneau (31', 31"), de sorte que ladite ceinture (34, 134) serre lesdits secteurs d'anneau (31', 31") contre ladite paroi latérale interne (11a, 111a) et contre ledit creux de jante (11, 111), en prenant appui sur ladite paroi latérale externe (11b, 111b),
**caractérisé en ce que** ladite ceinture comporte au moins deux zones de serrage rigides (34d, 34e) qui appuient respectivement sur ladite zone d'appui (33a, 133a) et sur ladite autre paroi latérale (11b, 111b) par mise en tension circonférentielle d'une zone de liaison souple (34a, 34c, 34f) que comporte ladite ceinture (34, 134) et qui relie lesdites zones de serrage (34d, 34e) entre elles.

14. Ensemble monté (1, 101) selon la revendication 13, **caractérisé en ce que** ladite ceinture (34, 134) est montée au-dessus d'un fond (11c, 111c) dudit creux (11, 111) reliant lesdites parois latérales (11a et 11b, 111a et 111b) entre elles, en étant séparée dudit fond (11c, 111c) par un jeu radial circonférentiel.

15. Ensemble monté (1, 101) selon la revendication 13 ou 14, **caractérisé en ce que** ledit dispositif de roulage à plat (30, 130) est tel que défini à l'une des revendications 2 à 12.

16. Ensemble monté (1, 101) selon une des revendications 13 à 15, ladite jante (10, 110) comportant des sièges de jante axialement interne et externe (14 et 15, 114 et 115) respectivement destinés à recevoir des talons (21 et 22, 121 et 122) de ladite enveloppe (20, 120), chaque siège de jante (14 et 15, 114 et 115) se terminant axialement par l'un desdits rebords (12 et 13, 112 et 113), ladite paroi latérale axialement externe (11b, 111b) dudit creux (11, 111) s'étendant axialement et radialement vers l'intérieur à partir dudit siège axialement externe (15, 115), **caractérisé en ce que** ladite paroi latérale axialement interne (11a, 111a) dudit creux (11, 111) s'étend axialement et radialement vers l'intérieur en formant une contre-dépouille coopérant avec une zone radialement interne de ladite face latérale axialement interne (32, 132) de l'anneau (31, 131), de sorte à bloquer ledit anneau (31, 131) sur ladite jante (10, 110).

17. Ensemble monté (101) selon la revendication 16, **caractérisé en ce que** ladite face latérale (132) de chaque secteur d'anneau (131) située du côté de ladite zone de butée (132a) comporte une collerette latérale (132b) en arc de cercle qui prolonge ladite zone de butée (132a) et qui est montée sur ladite jante (110) axialement à l'intérieur dudit creux (111), ledit fond (111c) dudit creux (111) étant sensiblement plat en section axiale.

18. Ensemble monté selon une des revendications 13 à 15, ladite jante (10) comportant des sièges de jante axialement interne et externe (14 et 15) respectivement destinés à recevoir des talons (21 et 22) de ladite enveloppe (20), chaque siège de jante (14 et 15) se terminant axialement par l'un desdits rebords (12 et 13), ladite paroi latérale axialement externe (11b) dudit creux (11) s'étendant axialement et radialement vers l'intérieur à partir dudit siège axialement externe (15), **caractérisé en ce que** ledit dispositif (30) est tel que défini à la revendication 12 et **en ce que** ladite jante (10) comporte axialement à l'intérieur dudit creux (11) une ou plusieurs encoches réparties localement sur la circonférence de ladite jante (10), ladite ou chaque encoche coopérant localement en butée avec ladite saillie latérale (39) de l'un au moins desdits secteurs d'anneau (31', 31") de sorte à immobiliser ce dernier en rotation sur ladite jante (10).

## Claims

1. A runflat device (30, 130) for a tubeless wheel unit (1, 101) for a motor vehicle, comprising an asymmetrical one-piece type wheel rim (10, 110) comprising a drop center (11, 111) defined by two lateral walls (11a and 11b, 111a and 111b) and a tire cover (20, 120) mounted on said rim (10, 110), said device (30, 130) being designed to be mounted in said drop center (11, 111) to support said tire (20, 120) following a drop in inflation pressure inside said unit (1, 101), said device (30, 130) comprising:
. a support ring (31, 131) divided into independent ring sectors (31', 31") and having two lateral faces (32 and 33, 132 and 133); and
. an annular clamping belt (34, 134) adapted to bear against a radially inner bearing zone (33a, 133a) of one of said lateral faces (33, 133) of the ring (31, 131) to wedge each ring sector (31', 31") in said drop center (11, 111) ;
said belt (34, 134) comprising rigid means for exerting a lateral clamping force (F_{L}) and a radial clamping force (F_{R}) on said bearing zone (33a, 133a) of said ring sectors (31', 31"), when these ring sectors and said belt (34, 134) are coaxially mounted in juxtaposition against said lateral walls (11a and 11b, 111a and 111b) of said drop center (11, 111), so that said belt (34, 134) clamps said ring sectors (31', 31") against one of said lateral walls (11a, 111a) and against said drop center (11, 111), bearing on the other lateral wall (11b, 111b),
**characterized in that** said belt (34, 134) comprises at least two rigid clamping zones (34d, 34e) which are respectively designed to bear on said bearing zone (33a, 133a) and on said other lateral wall (11b, 111b) by circumferentially tensioning a flexible connecting zone (34a, 34c, 34f) comprised in said belt (34, 134) and which connects said clamping zones (34d, 34e) together.

2. A device (30, 130) according to claim 1, **characterized in that** said belt (34, 134) is divided into at least two clamping sectors (34', 34") connected via a flexible annular band (34a) on which said clamping sectors (34', 34") are fixed and which has two ends (34b) distant from each other and connected together via a fastener means (34c) adapted to adjust said tensioning.

3. A device (30, 130) according to claim 2, **characterized in that** said belt (34, 134) comprises metallic or plastic tapes with a "U" shaped axial section having arms respectively forming said clamping zones (34d, 34e), said flexible connecting zone (34a, 34c, 34f) comprising said flexible band (34a) on which a web (34f) of each tape common to said arms (34d and 34e) is fixed, the ends (34b) of said flexible band (34a) being provided with said fastener means (34c).

4. A device (30, 130) according to claim 2 or claim 3, **characterized in that** said clamping sectors (34', 34") are spot welded to said flexible band (34a).

5. A device (30, 130) according to any preceding claim, **characterized in that** said bearing zone (33a, 133a) has a substantially truncated conical surface.

6. A device (30, 130) according to any one of claims 3 to 5, **characterized in that** each of said arms (34d and 34e) terminates in an end section (34g) which forms an angle in the range 50° to 80° with said web (34f).

7. A device (30, 130) according to any preceding claim, **characterized in that** said ring (31, 131) comprises a radially inner face (35, 135) designed to be mounted on a bottom (11c, 111c) of said drop center (11, 111) and a radially outer (36, 136) face designed to support said tire (20, 120) when running flat which is connected to said radially inner face (35, 135) by said lateral faces (132 and 133), said bearing zone (33a, 133a) of said ring (31, 131) being radially outwardly and axially inclined towards the opposed lateral face (32, 132) of said ring (31, 131).

8. A device (30, 130) according to claim 7, **characterized in that** said opposed lateral face (32, 132) of said ring (31, 131) comprises a radially inner abutment zone (32a, 132a) which is radially outwardly and axially inclined towards said bearing zone (33a, 133a) so that the axial section of said ring (31, 131) reduces radially outwardly in said bearing zone (33a, 133a) and abutment zone (32a, 132a).

9. A device (30) according to claim 8, **characterized in that** said lateral faces (32 and 33) of said ring (31) extend radially outwardly from said bearing zone (33a) and abutment zone (32a), being parallel then diverging from each other to endow said ring (31) with a maximum axial section equal to that of said radially outer face (36).

10. A device (130) according to claim 8, **characterized in that** said lateral face (132) of each ring sector (131) located on said abutment zone (132a) side comprises an arcuate lateral skirt (132b) which laterally extends said abutment zone (132a) and which is adapted to be mounted on a support surface of said rim (110), said drop center bottom (111c) being substantially flat in axial section.

11. A device according to claim 8, **characterized in that** said lateral face (32) of at least one of said ring sectors (31', 31") located on said abutment zone (32a) side is provided with a lateral projection (39) adapted to cooperate locally in abutment with at least one notch formed in said rim, to prevent rotation in the circumferential direction of said ring sectors (31', 31") around said rim.

12. A device (30, 130) according to any preceding claim, **characterized in that** said ring (31, 131) is based on a rigid material such as a thermoplastic polymer, its radially outer face (36, 136) designed to support said tire (20, 120) when running flat being rubber-based.

13. A tubeless wheel unit (1, 101) for a motor vehicle, comprising an asymmetrical one-piece type wheel rim (10, 110) comprising a drop center (11, 111) defined by an axially inner lateral wall (11a, 111a) and an axially outer lateral wall (11b, 111b) connected together by a bottom (11c, 111c), a tire cover (20, 120) mounted against the axially inner and outer flanges (12 and 13, 112 and 113) of said rim (10, 110) and a runflat device (30, 130) mounted in said drop center (11, 111) and designed to support said tire (20, 120) following a drop in inflation pressure inside said unit (1, 101), said device (30, 130) comprising:
• a support ring (31, 131) divided into independent ring sectors (31', 31") and having an axially inner lateral face (32, 132) and an axially outer lateral face (33, 133), said ring (31, 131) being mounted on said drop center bottom (11c, 111c) in abutment against said inner lateral wall (11a, 111a); and
• an annular clamping belt (34, 134) mounted to bear coaxially on a radially inner bearing zone (33a, 133a) of said outer lateral face (33, 133) of the ring (31, 131) to wedge each ring sector (31', 31") in said drop center (11, 111), and which is mounted against said outer lateral wall (11b, 111b);
said belt (34, 134) comprising rigid means adapted for exerting a lateral clamping force (F_{L}) and a radial clamping force (F_{R}) on said bearing zone (33a, 133a) of said ring sectors (31', 31") so that said belt (34, 134) clamps said ring sectors (31', 31") against said lateral wall (11a, 111a) and against said drop center (11, 111), bearing on said other lateral wall (11b, 111b),
**characterized in that** said belt (34, 134) comprises at least two rigid clamping zones (34d, 34e) which respectively bear on said bearing zone (33a, 133a) and on said other lateral wall (11b, 111b) by circumferentially tensioning a flexible connecting zone (34a, 34c, 34f) comprised in said belt (34, 134) and which connects said clamping zones (34d, 34e) together.

14. A unit (1, 101) according to claim 13, **characterized in that** said belt (34, 134) is mounted above a web (11c, 111c) of said drop center (11, 111) connecting said lateral walls (11a and 11b, 111a and 111b) together, being separated from said bottom (11c, 111c) by a circumferential radial clearance.

15. A unit (1, 101) according to claim 13 or claim 14, **characterized in that** said runflat device (30, 130) is as defined in any one of claims 2 to 12.

16. A unit (1, 101) according to any one of claims 13 to 15, said rim (10, 110) comprising axially inner and outer rim seats (14 and 15, 114 and 115) respectively designed to receive beads (21 and 22, 121 and 122) of said tire (20, 120), each rim seat (14 and 15, 114 and 115) terminating axially by one of said flanges (12 and 13, 112 and 113), said axially outer lateral wall (11b, 111b) of said drop center (11, 111) extending radially and axially inwardly from said axially outer seat (15, 115), **characterized in that** said axially inner lateral wall (11a, 111a) of said drop center (11, 111) extends axially and radially inwardly by forming an undercut cooperating with a radially inner zone of said axially inner lateral face (32, 132) of the ring (31, 131), to lock said ring (31, 131) on said rim (10, 110).

17. A unit (1, 101) according to claim 16, **characterized in that** said lateral face (132) of each ring sector (131) located on said abutment zone (132a) side comprises an arcuate lateral skirt (132b) which extends said abutment zone (132a) and which is mounted on said rim (110) axially inwardly of said drop center (111), said bottom (111c) of said drop center (111) being substantially flat in axial section.

18. A unit according to any one of claims 13 to 15, said rim (10) comprising axially inner and outer rim seats (14 and 15) respectively designed to receive beads (21 and 22) of said tire (20), each rim seat (14 and 15) terminating axially by one of said flanges (12 and 13), said axially outer lateral wall (11b) of said drop center (11) extending axially and radially inwardly from said axially outer seat (15), **characterized in that** said device (30) is as defined in claim 12 and **in that** said rim (10) includes axially inwardly of said drop center (11) one or more notches locally distributed on the circumference of said rim (10), said or each notch locally cooperating in abutment with said lateral projection (39) of at least one of said ring sectors (31' , 31") to prevent the ring from rotating on said rim (10).

## Patentansprüche

1. Vorrichtung zum Fahren mit plattem Reifen (30, 130), die dazu bestimmt ist, eine montierte Konstruktion (1, 101) ohne Luftkammer für ein Kraftfahrzeug auszustatten, umfassend eine asymmetrische Radfelge (10, 110) vom Monoblock-Typ, die eine Felgenvertiefung (11, 111), die durch zwei Seitenwände (11a und 11b, 111a und 111b) definiert wird, und einen Reifenmantel (20, 120), der auf die Felge (10, 110) montiert ist, umfasst, wobei die Vorrichtung (30, 130) dazu bestimmt ist, in die Felgenvertiefung (11, 111) montiert zu werden, um dem Mantel (20, 120) nach Abfall des Reifendrucks im Inneren der montierten Konstruktion (1, 101) Halt zu geben, wobei die Vorrichtung (30, 130) umfasst:
- einen Stützring (31, 131) der in unabhängige Ringabschnitte (31', 31") aufgeteilt ist und zwei Seitenwände (32 und 33, 132 und 133) aufweist; und
- einen ringförmigen Spanngürtel (34, 134), der angepasst ist, um als Stütze auf einer Stützzone (33a, 133a) radial innerhalb einer der Seitenwände (33, 133) des Rings (31, 131) montiert zu werden, derart, dass jeder Ringabschnitt (31', 31") in der Felgenvertiefung (11, 111) gestützt wird;
wobei der Gürtel (34, 134) starre Mittel umfasst, die angepasst sind, um eine seitliche Spannkraft (F_{L}) und eine radiale Spannkraft (F_{R}) auf die Stützzone (33a, 133a) der Ringabschnitte (31', 31") auszuüben, wenn diese letzten und der Gürtel (34, 134) koaxial nebeneinander gegen die Seitenwände (11a und 11b, 111a und 111b) der Vertiefung (11, 111) derart montiert sind, dass der Gürtel (34, 134) die Ringabschnitte (31', 31") gegen eine der Seitenwände (11a, 111a) und gegen die Vertiefung (11, 111) gedrückt werden, indem die andere Seitenwand (11b, 111b) als Stütze genommen wird,
**dadurch gekennzeichnet, dass** der Gürtel (34, 134) wenigstens zwei starre Spannzonen (34d, 34e) umfasst, die jeweils dazu bestimmt sind, auf die Stützzone (33a, 133a) und auf die andere Seitenwand (11b, 111b) zu drücken, und zwar durch Unter-Umfangsspannung-Setzen einer weichen Bindungszone (34a, 34c, 34f), die den Gürtel (34, 134) aufweist und die die Spannzonen (34d, 34e) untereinander verbindet.

2. Vorrichtung (30, 130) nach Anspruch 1, **dadurch gekennzeichnet, dass** der Gürtel (34, 134) in wenigstens zwei Spannabschnitte (34', 34") aufgeteilt ist, die Mittels eines weichen ringförmigen Streifens (34a) verbunden sind, auf dem die Spannabschnitte (34', 34") fixiert sind und der zwei voneinander beabstandete Enden (34b) aufweist, die mit Hilfe eines Verbindungsmittels (34c) miteinander verbunden sind, das angepasst ist, um das Unter-Spannung-Setzen zu regulieren.

3. Vorrichtung (30, 130) nach Anspruch 2, **dadurch gekennzeichnet, dass** der Gürtel (34, 134) Metall- oder Kunststoffbänder mit einem axialen Querschnitt in "U"-Form umfasst, die Flügel aufweisen, die jeweils die Spannzonen (34d, 34e) bilden, wobei die weiche Bindungszone (34a, 34c, 34f) den weichen Streifen (34a) umfasst, an dem ein Kern (34f) jedes Bandes befestigt ist, der den Flügeln (34d und 34e) gemeinsam ist, wobei der weiche Streifen (34a) an seinen Enden (34b) frei von dem Verbindungsmittel (34c) ist.

4. Vorrichtung (30, 130) nach Anspruch 2 oder 3, **dadurch gekennzeichnet, dass** die Spannabschnitte (34', 34") durch Punkte auf dem weichen Streifen (34a) angeschweißt sind.

5. Vorrichtung (30, 130) nach einem der vorangehenden Ansprüche, **dadurch gekennzeichnet, dass** die Stützzone (33a, 133a) eine etwa kegelstumpfförmige Oberfläche aufweist.

6. Vorrichtung (30, 130) nach einem der Ansprüche 3 bis 5, **dadurch gekennzeichnet, dass** jeder der Flügel (34d und 34e) in einem Endteilstück (34g) endet, das mit dem Kern (34f) einen Winkel zwischen 50° und 80° bildet.

7. Vorrichtung (30, 130) nach einem der vorangehenden Ansprüche, **dadurch gekennzeichnet, dass** der Ring (31, 131) eine radial innere Seite (35, 135), die dazu bestimmt ist, an einem Boden (11c, 111c) der Vertiefung (11, 111) montiert zu werden, und eine radial äußere Seite (36, 136) aufweist, die dazu bestimmt ist, den Mantel (20, 120) beim Fahren auf den Felgen zu stützen, die mit der radial inneren Seite (35, 135) durch die Seitenflächen (132 und 133) verbunden ist, wobei die Stützzone (33a, 133a) des Rings (31, 131) radial nach außen und axial gegen die gegenüberliegende Seitenfläche (32, 132) des Rings (31, 131) abgeschrägt ist.

8. Vorrichtung (30, 130) nach Anspruch 7, **dadurch gekennzeichnet, dass** die gegenüberliegende Seitenfläche (32, 132) des Rings (31, 131) eine radial innere Anschlagszone (32a, 132a) umfasst, die radial gegen das Äußere und axial gegen die Stützzone (33a, 133a) abgeschrägt ist, derart, dass der axiale Abschnitt des Rings (31, 131) sich radial nach außen in der Stützzone (33a, 133a) und der Anschlagszone (32a, 132a) verjüngt.

9. Vorrichtung (30) nach Anspruch 8, **dadurch gekennzeichnet, dass** sich die Seitenflächen (32 und 33) des Rings (31) radial nach außen ausgehend von der Stützzone (33a) und der Anschlagszone (32a) verlängern und parallel sind, sich dann voneinander entfernen, bis sie dem Ring (31) einen maximalen axialen Abschnitt verleihen, der gleich dem der radial äußeren Fläche (36) ist.

10. Vorrichtung (130) nach Anspruch 8, **dadurch gekennzeichnet, dass** die Seitenfläche (132) jedes Ringabschnitts (131) die neben der Anschlagszone (132a) gelegen ist, einen lateralen Rand (132b) als Kreisbogen umfasst, der die Anschlagszone (32a) seitlich verlängert und der angepasst ist, um auf eine Auflagefläche der Felge (110) montiert zu werden, wobei der Boden der Vertiefung (111c) im axialen Schnitt ungefähr eben ist.

11. Vorrichtung nach Anspruch 8, **dadurch gekennzeichnet, dass** die Seitenfläche (32) wenigstens eines der Ringabschnitte (31', 31") die neben der Anschlagszone (32a) gelegen ist, frei von einer seitlichen Auskragung (39) ist, welche angepasst ist, um lokal als Anschlag mit wenigstens einer Aussparung, die in der Felge gebildet ist, zu kooperieren, derart, dass die Drehung in der Umfangsrichtung der Ringabschnitte (31', 31") um die Felge verhindert wird.

12. Vorrichtung (30, 130) nach einem der vorangehenden Ansprüche, **dadurch gekennzeichnet, dass** der Ring (31, 131) aus einem starren Material wie einem thermoplastischen Polymer ist, wobei seine radial äußere Fläche (36, 136), die dazu bestimmt ist, den Mantel (20, 120) beim Fahren mit plattem Reifen zu stützen, auf Kautschuk-Basis ist.

13. Montierte Konstruktion (1, 101) ohne Luftkammer für ein Kraftfahrzeug, umfassend eine asymmetrische Radfelge (10, 110) vom Monoblock-Typ, die eine Felgenvertiefung (11, 111), die durch zwei Seitenwände, axial innen und außen, (11a und 11b, 111a und 111b), die miteinander durch einen Boden (11c, 111c) verbunden sind, definiert wird, einen Reifenmantel (20, 120), der gegen axial innere und äußere Randleisten (12 und 13, 112 und 113) der Felge (10, 110) montiert ist, und eine Vorrichtung zum Fahren mit plattem Reifen (30, 130), die in der Felgenvertiefung (11, 111) montiert ist und dazu bestimmt ist, den Mantel (20, 120) nach Abfall des Reifendrucks im Inneren der montierten Konstruktion (1, 101) zu stützen, wobei die Vorrichtung (30, 130) umfasst:
- einen Stützring (31, 131), der in unabhängige Ringabschnitte (31', 31") aufgeteilt ist und zwei axial innere und äußere Seitenflächen (32 und 33, 132 und 133) aufweist, wobei der Ring (31, 131) an dem Boden der Vertiefung (11c, 111c) als Anschlag gegen die innere Seitenwand (11a, 111a) montiert ist, und
- einen ringförmigen Spanngürtel (34, 134), der als Stütze in koaxialer Art an der Stützzone (33a, 133a) radial innerhalb der äußeren Seitenfläche (33, 133) des Rings (31, 131) derart montiert ist, dass jeder Ringabschnitt (31', 31") in der Vertiefung (11, 111) gestützt ist, und der gegen die äußere Seitenwand (11b, 111b) montiert ist,
wobei der Gürtel (34, 134) starre Mittel umfasst, die angepasst sind, um eine seitliche Spannkraft (F_{L}) und eine radiale Spannkraft (F_{R}) auf die Stützzone (33a, 133a) der Ringabschnitte (31', 31") auszuüben, derart, dass der Gürtel (34, 134) die Ringabschnitte (31', 31") gegen die innere Seitenwand (11a, 111a) und gegen die Felgenvertiefung (11, 111) drückt, wobei die äußere Seitenwand (11b, 111b) als Stütze genommen wird,
**dadurch gekennzeichnet, dass** der Gürtel wenigsten zwei starre Spannzonen (34d, 34e) umfasst, die jeweils auf die Stützzone (33a, 133a) und die andere Seitenwand (11b, 111b) drücken, und zwar durch Unter-Umfangsspannung-Setzen einer weichen Bindungszone (34a, 34c, 34f), die den Gürtel (34, 134) trägt und die die Spannzonen (34d, 34e) untereinander verbindet.

14. Montierte Konstruktion (1, 101) nach Anspruch 13, **dadurch gekennzeichnet, dass** der Gürtel (34, 134) oberhalb eines Bodens (11c, 111c) der Vertiefung (11, 111), der die Seitenwände (11a und 11b, 111a und 111b) miteinander verbindet, montiert ist, wobei er von dem Boden (11c, 111c) durch ein radiales Umfangsspiel getrennt ist.

15. Montierte Konstruktion (1, 101) nach Anspruch 13 oder 14, **dadurch gekennzeichnet, dass** die Vorrichtung zum Fahren mit plattem Reifen (30, 130) wie in einem der Ansprüche 2 bis 12 definiert ist.

16. Montierte Konstruktion (1, 101) nach einem der Ansprüche 13 bis 15, wobei die Felge (10, 110) axial innere bzw. äußere Felgensitze (14 und 15, 114 und 115) umfasst, die dazu bestimmt sind, Wulste (21 und 22, 121 und 122) des Mantels (20, 120) aufzunehmen, wobei jeder Felgensitz (14 und 15, 114 und 115) axial in einer der Randleisten (12 und 13, 112 und 113) endet, wobei sich die axial äußere Seitenwand (11b, 111b) der Vertiefung (11, 111) axial und radial ausgehend von dem axial äußeren Sitz (15, 115) in das Innere erstreckt, **dadurch gekennzeichnet, dass** sich die axial innere Seitenwand (11a, 111a) der Vertiefung (11, 111) axial und radial in das Innere erstreckt, indem sie eine Hinterschneidung bildet, die mit einer radial inneren Zone der axial inneren Seitenfläche (32, 132) des Rings (31, 131) derart kooperiert, dass der Ring (31, 131) an der Felge (10, 110) blockiert wird.

17. Montierte Konstruktion (101) nach Anspruch 16, **dadurch gekennzeichnet, dass** die Seitenfläche (132) jedes Ringabschnitts (131) die neben der Anschlagszone (132a) gelegen ist, einen lateralen Kragen (132b) als Kreisbogen umfasst, der die Anschlagszone (132a) verlängert und axial auf der Felge (110) im Inneren der Vertiefung (111) montiert ist, wobei der Boden (111c) der Vertiefung (111) im axialen Schnitt ungefähr eben ist.

18. Montierte Konstruktion nach einem der Ansprüche 13 bis 15, wobei die Felge (10) die axial innere und äußere Felgensitze (14 und 15) umfasst, die dazu bestimmt sind, Wulste (21 und 22) des Mantels (20) aufzunehmen, wobei jeder Felgensitz (14 und 15) axial in einer der Randleisten (12 und 13) endet, die axial äußere Seitenwand (11b) der Vertiefung (11) ausgehend von dem axial äußeren Sitz (15) axial und radial in das Innere erstreckt, **dadurch gekennzeichnet, dass** die Vorrichtung (30) wie in Anspruch 12 definiert ist und dass die Felge (12) axial im Inneren der Vertiefung (11) ein oder mehrere Aussparungen lokal über den Umfang der Felge (10) verteilt umfasst, wobei die oder jede Aussparung lokal als Anschlag mit der lateralen Auskragung (39) wenigstens eines der Ringabschnitte (31', 31") derart kooperiert, dass diese letzte in der Rotation auf der Felge (10) immobilisiert wird.
